## Europäisches Patentamt
## European Patent Office
## Office européen des brevets

(19)

(11) Veröffentlichungsnummer: **0 046 910**
**B2**

(12)

# NEUE EUROPÄISCHE PATENTSCHRIFT

(45) Veröffentlichungstag der neuen Patentschrift:
02.09.87

(21) Anmeldenummer: **81106330.4**

(22) Anmeldetag: **14.08.81**

(51) Int. Cl.⁴: **B 23 K 28/00**

(54) **Bearbeitungsmaschine mit einer thermischen Schneidstrahleinrichtung, insbesondere Plasmaschneidstrahleinrichtung.**

(30) Priorität: **30.08.80 DE 3032728**

(43) Veröffentlichungstag der Anmeldung:
**10.03.82 Patentblatt 82/10**

(45) Bekanntmachung des Hinweises auf die Patenterteilung:
**02.11.83 Patentblatt 83/44**

(45) Bekanntmachung des Hinweises auf die Entscheidung
über den Einspruch:
**02.09.87 Patentblatt 87/36**

(84) Benannte Vertragsstaaten:
**CH FR GB LI**

(56) Entgegenhaltungen:
**DE-A-954 816**
**DE-A-2 121 155**
**DE-B-2 823 037**
**SU-A-712 216**
**US-A-4 063 059**
**US-A-4 087 670**

(73) Patentinhaber: **Trumpf GmbH & Co, Postfach 1320
Johann- Maus- Strasse 2, D-7257 Ditzingen (DE)**

(72) Erfinder: **Klingel, Hans, Teckstrasse 91, D-7141
Möglingen (DE)**

(74) Vertreter: **Patentanwälte Dipl.- Ing. B. Schmid Dr.-
Ing. G.A. Birn Dipl.- Ing. H. Quarder,
Falbenhennenstrasse 17, D-7000 Stuttgart 1 (DE)**

LIBER, STOCKHOLM 1987

EP 0 046 910 B2

## Beschreibung

Die Erfindung bezieht sich auf eine Bearbeitungsmaschine für flache Werkstücke mit einer thermischen Schneidstrahleinrichtung, insbesondere Plasmaschneideinrichtung, die eine Öffnung für den Schneidstrahl aufweist und bei der konzentrisch zum Schneidstrahl Wasser austritt, wobei konzentrisch zur Schneidstrahleinrichtung eine ringförmige Vorrichtung zum Abführen des Wassers angeordnet ist. Eine derartige Vorrichtung ist durch die DE-C-954 816 bekannt geworden. Der Schneidstrahl wird zwischen einer Kohleelektrode und dem als Gegenelektrode wirkenden Werkstück gezogen. Dazwischen befindet sich eine Ausflußdüse der Schneidstrahleinrichtung, mit deren Hilfe der Lichtbogen bzw. Schneidstrahl eingeschnürt wird. Zusätzlich wird der Schneidstrahl mit Hilfe eines zwischen diese Ausflußdüse und das Flektrodenende geschalteten Wirbelkanals eingeschnürt, an dessen von der Ausflußdüse abgewandtem Ende Wasser über eine Ringdüse zugeführt wird. Entlang der Oberfläche der Ausflußdüse fließt ein dünner Flüssigkeitsschleier, der den Schneidstrahl konzentrisch umgibt. Das Wasser dieses Flüssigkeitsschleiers wird in der ringförmigen Vorrichtung gesammelt, die der Ausflußdüse vorgelagert und konzentrisch zu ihr angeordnet ist. Über einen Abfluß wird diese ringförmige Vorrichtung entleert.

Bei diesem Schneidstrahl handelt es sich also um einen Lichtbogen, der das Wasser an der Oberfläche des Wirbelkanals "verdampft und atomar zerlegt". Dadurch entsteht ein Wasserstoff-Sauerstoff-Gemisch, welches hinter der Ausflußdüse in statu nascendi verbrennt. Auf diese Weise entsteht ein Plasmastrahl, dessen Temperatur diejenige des Lichtbogens um das Mehrfache übertrifft.

Um die Schmelzwirkung beim Auftreffen auf das Werkstück nicht zu schmälern, wird es als "wichtig" angesehen, "daß die aus der Düse austretende Flüssigkeit nicht das Werkstück" benetzt.

Bei dieser Bearbeitungsmaschine muß also darauf geachtet werden, daß möglischst wenig Wasser durch die Schneidstrahleinrichtung fließt, um das Werkstück trocken zu halten. Dies führt zu einer hohen thermischen Belastung der Schneidstrahleinrichtung, insbesondere der erwähnten Ausflußdüse. Es kommt noch hinzu, daß man nicht nur aus thermischen Gründen kein Wasser auf der Oberfläche des Werkstückes wünscht, sondern auch deshalb, weil keine Möglichkeit gegeben wäre, dieses Wasser von der Werkstückoberfläche kontrolliert abzuführen.

Es wäre zwar möglich, das zu bearbeitende Werkstück auf Stützen in eine mit Wasser gefüllte Wanne zu legen, wie dies die US-A-4 087 670 vorschlägt, jedoch würde dann die Größe der maximal bearbeitbaren Werkstücke von der Wannengröße abhängen. Legt man die Maschine für verhältnismäßig große Werkstücke aus, so hat das einen enormen Platzbedarf zur Folge. Diese wäre aber bei der Bearbeitung kleiner Werkstücke nicht gerechtfertigt, weswegen jede Maschengröße im Grunde genommen immer eine Kompromißlösung darstellem würde. Außerden würde dies aus praktischen Gründen grundsätzlich eine Bewegung der Bearbeitungsmaschine gegenüber dem Werkstück notwendig machen.

Die Aufgabe der Erfindung besteht infolgedessen darin, eine Bearbeitungsmaschine der eingangs genannten Art so weiterzubilden, daß bei geringem Platzbedarf und Verzicht auf eine Beschränkung hinsichtlich der Werkstückgröße sowie Erhaltung der Einschnürungswirkung des Plasmastrahls durch das Wasser die thermische Belastung der Schneidstrahleinrichtung möglichst gering ist.

Zur Lösung dieser Aufgabe wird erfindumgsgemäß vorgeschlagen, das die Bearbeitungsmaschine gemäß dem Oberbegriff des Anspruchs 1 entsprechend dem kennzeichnendem Teil dieses Anspruchs ausgebildet ist. Durch die Verwendung einer Vorrichtung zum Bewegen des Werkstücks innerhalb der Werkstückebene kann mit einer stillstehenden Schneidstrahleinrichtung gearbeitet werden und dies führt in der angestrebten Weise zu einem sehr geringen Platzbedarf der Bearbeitungsmaschine, der beispielsweise demjenigen einer herkömmlichen Stanz- oder Nibbelmaschine entspricht, auf welcher tafelartige Werkstücke mechanisch bearbeitet werden. Zugleich kann die Vorrichtung zum Bewegen des Werkstücks innerhalb seiner Ebene genau gleich ausgebildet werden wie bei herkömmlichen Stanz-und/oder Nibbelmhschinen, weswegen es insoweit einer näheren Erläuterung dieser Vorrichtung hier nicht bedarf. Verwendung findet vor allen Dingen eine kreuzsupportartige Verstellvorrichtung, wie sie in Ausführungsbeispiel schematisch gezeigt und beschrieben ist. Infolgedessen ist die maximale Werkstückgröße ausschließlich durch die Höchstbeträge der Längs- und Querverschiebung bestimmt. Weil nummehr verhältnismäßig viel Wasser die Schneidstrahleinrichtung durchströmen kann und das Wasser die Öffnung für den Schneidstrahl konzentrisch umgibt, erreicht man eine wirkungsvolle Düsenkühlung. Zugleich wird durch dieses Wasser in bekannter Weise der Plasmastrahl eingeschnürt. Letzteres führt zu einer Erhöhung der Energiekonzentration in Strahl und bringt eine ganze Reihe der Fachwelt bereits bekannte Vorteile mit sich. Auf die Verwendung einer Wanne kann verzichtet werden, weil das auf die Werkstückoberfläche strömende Wasser im Bereich der Schneidstelle mit Hilfe der Absaugdüse sofort wieder abgezogen wird. Dies führt zwangsläufig auch zu einer Kühlung des Werkstücks im Bereich der Schneidstelle. Zugleich erreicht man noch einen weiteren wichtigen Vorteil, nämlich eine wesentliche Reduzierung des unvermeidlichen Lärms beim Plasmaschneiden. Der rohrförmige Wasservorhang, welcher den Schneidstrahl konzentrisch umgibt, schirmt die Lärmquelle unmittelbar an ihrer Entstehungsstelle nach außen hin ab, so daß die Lärmbeeinträchtigung am betreffenden Arbeitsplatz erheblich gemindert wird. Der Schneidstelle kann aufgrund der erfindungsgemäßen Ausbildung mehr Wasser zugeführt werden, als für die Einschnürung des Strahls und die Kühlung benötigt wird. Es entsteht ein kräftigerer Wasservorhang, der die Lärmminderung erhöht. In übrigen ist einer ringförmigen Absaugdüse ein Kranz von Absaugdurchbrüchen etwa gleichwertig.

Eine bevorzugte Ausführungsform der Erfindung sieht vor, daß eine gedachte mittlere Fläche der Absaugdüse bzw. die Mittellinien der Absaugbohrungen die Form eines Kegelstumpfes aufweist bzw. auf einem gedachten Kegelstumpf liegen, dessen kleinerer Durchmesser der Werkzeugauflage zugeordnet ist. Damit erzeugt man eine nach außen oben gerichtete Saugwirkung, die ein gutes Absaugergebnis gewährleistet. Ob man zweckmäßigerweise eine ringförmige Absaugdüse oder einen Kranz von Absaurgbohrunhen wählt, hängt vom Einzelfall ab und steht auch in einem gewissen Zusammenhand mit der Größe und Leistung der jeweiligen Schneidstrahleinrichtung.

In Weiterbildung der Erfindung wird vorgeschlagen, daß in das innere Ende der Absaugdüse oder in einen die inneren Endem der Absaugbohrungen verbindenden Ringkanal wenigstens eine mit einer Absaudvorrichtung verbundene Saugleitung mündet, die zumindest teilweise in der Form eines festen Kanals vorhanden sein kann. Es kann aber auch zweckmäßig sein, mindestens einen Teil als flexible Schlauchleitung auszubilden.

Des weiteren ist es sehr vorteilhaft, daß das die thermische Schneidstrahleinrichtung konzentrisch umgebende Rohr in Richtung seiner Längsachse verschiebbar gelagert ist. Die Saugwirkung der Absaugdüse wird allein in dem durch das Werkstück, das anlegbare Rohr und die Schneidstrahleinrichtung definierten Raum entfaltet. Bei Nichtgebrauch, beispielsweise beim Auswechseln der Werkstücke, ist ein Hocheben des anlegbaren Rohres möglich, so daß die Absaugvorrichtung weder stört noch Beschädinungen ausgesetzt ist. Die Verschiebbarkeit der Absaugdüse ermöglicht auch eine gute räumliche Anpassung der Absaugvorrichtung an die durch das Werkstück und die Schneidstrahleinrichtung festgelegten Gegebenheiten.

Eine bevorzugte Weiterbildung der Erfindung sieht vor, dass die Absaugvorrichtung konzentrisch von einer ringförmigen Sprühvorrichtung zur Erzeugung eines rohrförmigen Wasservorhangs umgeben ist. Letzterer schirmt den beim Brennschneiden, insbesondere beim plasmaschneiden unvermeidlichen Lärm ab, so dass diese Ausbildung die Beeinträchtigung am betreffenden Arbeitsplatz erheblich mindert. In diesem Zusammenhang sieht eine weitere Ausgestaltung der Erfindung vor, dass konzentrisch zur Sprühvorrichtung eine Absaugvorrichtung für die Sprühflüssigkeit angeordnet ist, Dieser Absaugvorrichtung kommt im Grunde genommen noch grössere Bedeutung zu als derjenigen für die Schneidstrahlflüssigkeit, weil normalerweise weit mehr Sprühflüssigkeit als Schneidstrahlflüssigkeit benötigt wird.

Nachdem die pro Zeiteinheit anfallende Sprühflüssigkeitsmenge nicht vernachlässigbar ist und auf die Anbringung einer Auffangwanne bewusst verzichtet wird, muss man auch die Sprühflüssigkeit absaugen. Dies kann man mittels der zweiten Absaugvorrichtung oder gemäss einer Weiterbildung der Erfindung dadurch bewerkstelligen, dass die Absaugvorrichtung für die Schneidstrahlflüssigkeit zugleich die Absaugvorrichtung für die Sprühflüssigkeit bildet. Es bedarf demnach lediglich einer zusätzlichen Absaugdüse oder zusätzlicher Absaugbohrungen, deren innere Enden beispielsweise auch mit dem Ringkanal der Absaugbohrungen für die Schneidstrahlflüssigkeit in Verbindung stehen können. Die Verwendung einer Doppel-Absaugvorrichtung muss nicht notwendigerweise bei jeder Ausführungsform gleich zweckmässig sein. Es hängt im einzelnen Falle sicherlich von den jeweiligen Wassermengen, der Leistung der Saugvorrichtung und noch verschiedenen anderen Komponenten ab. Bei Verwendung einer separaten Absaugvorrichtung für die Sprühflüssigkeit wird man diese in vorteilhafter Weise konzentrisch ausserhalb der Sprühvorrichtung für die Schalldämpfung anordnen. Auf einem noch grösseren Durchmesser kann man gegebenenfalls noch eine Schürze, einen Dichtring od. dgl. vorsehen, die bzw. der während des Arbeitens auf dem Werkstück aufliegt.

In der Zeichnung ist ein Ausführungsbeispiel der Erfindung dargestellt. Es zeigen:

Figur 1 perspektivisch die Bearbeitungsmaschine,

Figur 2 teilweise in Ansicht und teilweise in vertikaler Richtung geschnitten, in vergrössertem Maßstab ein Detail der Fig. 1 im Bereich der Schneidstrahleinrichtung und Absaugvorrichtungen.

An dem im wesentlichen etwa C-förmigen Maschinenkörper 1 befindet sich eine Koordinatenführung 2 für das Werkstück 3, die eine Längsführung 4 und eine Queführung 5 umfasst. Dabei besteht dann ihrerseits die Längsführung 4 aus einer fest mit dem Maschinenkörper 1 verbundenen Laufschiene 6 und einem daran im Sinne des Doppelpfeils 7 verschiebbar geführten Laufwagen 8. Die Verschiebebewegung erzielt man vorzugsweise mit Hilfe eines Antriebsmotors 9, der ein Ritzel 10 dreht. Dieses greift in eine Verzahnung der als Zahnstange ausgebildeten Laufschiene 6 ein.

Der Laufwagen 8 trägt noch einen zweiten Antriebsmotor 11 mit Ritzel 12. Dessen Zähne kammen mit denjenigen einer Tragschiene 13, die ebenfalls, wenigstens zum Teil, als Zahnstange gestaltet ist oder eine solche hält. Mit Hilfe des zweiten Antriebsmotors 11 kann man die Tragschiene 13 im Sinne des Doppelpfeils 14 hin- und herverschieben. Die beiden Bewegungsrichtungen 7 und 14 verlaufen senkrecht zueinander.

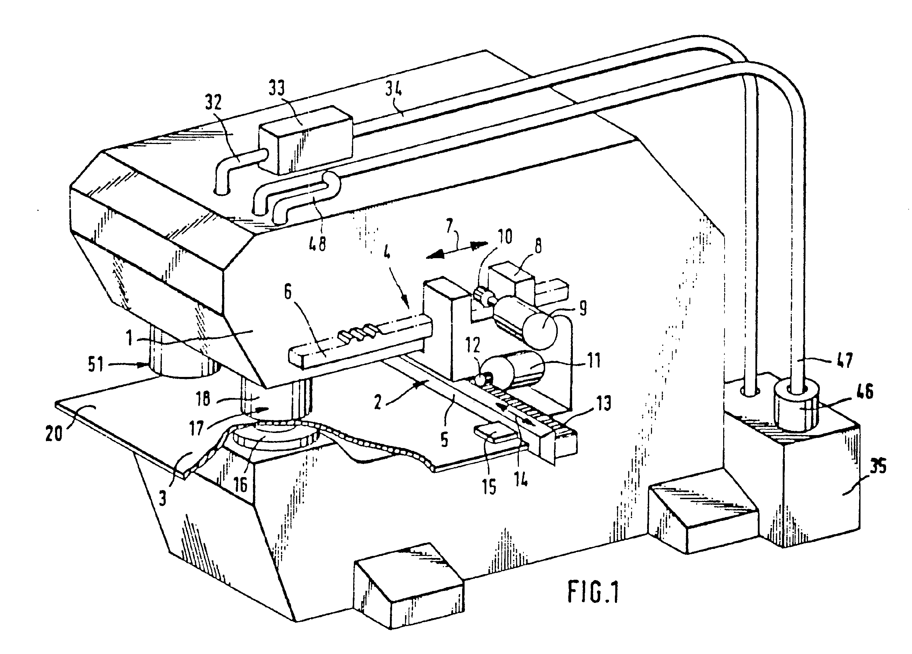

An der Tragschiene 13 befinden sich vorzugsweise zwei Pratzenpaare 15, zwischen denen das plattenförmige Werkstück 3 eingeklemmt ist und von denen in Fig. 1 eine zu sehen ist. Es leuchtet ohne weiteres ein, dass das Werkstück mit Hilfe des Antriebsmotors 9 eine Verschiebebewegung im Sinne des Doppelpfeils 7 und mittels des Antriebsmotors 11 eine Verstellbewegung in Richtung des Doppelpfeils 14 ausführt. Bei gleichzeitigem Lauf beider Motoren 9, 11 erzielt man eine überlagerte Längs- und Querbewegung. Das Werkstück 3 stützt sich ausserdem noch auf dem Unterteil 16 einer thermischen Schneidstrahleinrichtung 17, insbesondere einer Plasma-Schneideinrichtung ab, deren Oberteil mit 18 bezeichnet ist. Letzteres umfasst eine Schneidstrahldüse 19, aus welcher der Schneidbrennstrahl austritt, der auf der Oberseite 20 des Werkstücks 3 auftrifft und das Werkstück an der betreffenden Stelle durchschmilzt. Infolgedessen tritt der Schneidbrennstrahl an der Unterseite 21 des Werkstücks wiederaus.

Die Schneidstrahldüse 19 umfasst eine Elektrode 22, die von einem Führungsrohr 23 mit Abstand umgeben ist, welches sie gegen das Werkstück 3 hin überragt und einen Strömungskanal für das zum Strahlschneiden erforderliche Gas 24 bildet. Demnach steht das innere Ende des Führungsrohres 23 über eine nicht dargestellte Leitung mit einem Gasbehälter in Verbindung. Ein Düsenkörper 25 umgibt das Führungsrohr 23 mit Abstand konzentrisch, so dass ein Kanal 26 für die Zuführung von Wasser entsteht. An seinem Austrittsende 27 verengt sich der mittlere Durchmesser des Kanals 26, weswegen der Wasserstrahl in schräger Richtung auf den plasmastrahl auftrifft. Dies führt in bekannter Weise zu einer Einschnürung des Plasmastrahls und damit zu einer Erhöhung der Energiedichte.

Aus dem Vorstehenden ergibt sich, dass auf der Oberseite 20 des Werkstücks 3 nicht nur der Plasmastrahl, sondern auch der diesen umgebende rohrförmige Wasserstrahl auftrifft. Damit dieses Wasser nicht unkontrolliert abfliesst, ist nach der erfindungsgemässen Ausgestaltung dieser Bearbeitungsmaschine ausser der Vorrichtung zum Bewegen des Werkstücks innerhalb seiner Ebene auch noch eine zur thermischen Schneidstrahleinrichtung 17 konzentrische Absaugvorrichtung 28 vorgesehen. Wesentlicher Bestandteil dieser Absaugvorrichtung ist eine ringförmige Absaugdüse 29 oder ein entsprechender Kranz von Absaugbohrungen, wobei eine gedachte mittlere Fläche 30 in Analogie zum Austrittsende 27 für das Wasser die Form eines Kegelstumpfs aufweist. Dementsprechend würden die Mittellinien der Absaugbohrungen auf einem derartigen gedachten Kegelstumpf liegen, dessen kleinerer Durchmesser der Werkstückauflage zugeordnet ist.

Das innere Ende der ringförmigen Absaugdüse bildet einen oder mündet in einen Ringkanal 31, der über eine Saugleitung 32 mit einer Saugpumpe 33 verbunden ist. Von letzterer führt eine Leitung 34 (Fig. 1) zum Flüssigkeitsbehälter 35. Im Falle der ringförmigen Anordnung von Absaugbohrungen ist auf jeden Fall ein Ringkanal 31 erforderlich.

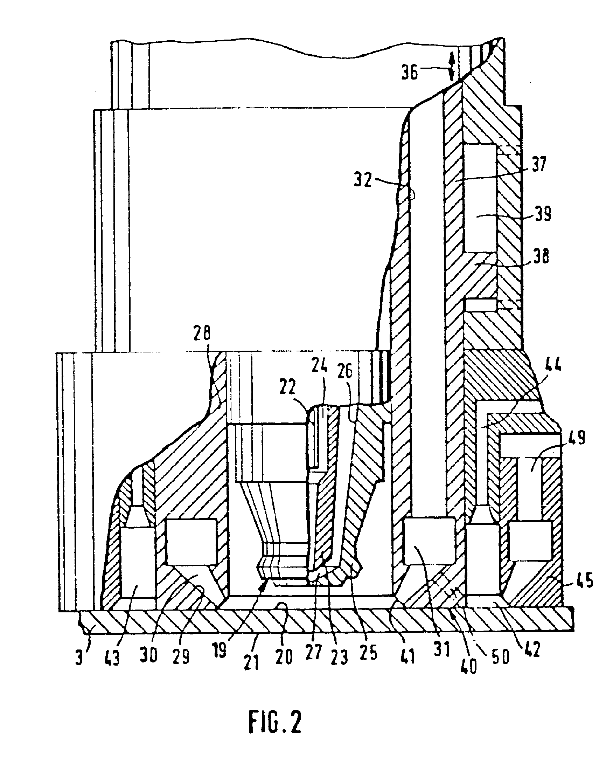

Um die Absaugöffnungen möglichst nahe an die Oberseite 20 des Werkstücks 3 heranbringen und gegebenenfalls den Abstand zwischen Werkstück und Mündung der Schneidstrahldüse variieren zu können, befindet sich die Absaugdüse bzw. die Absaugbohrungen mit dem Ringkanal 31 und wenigstens einem Teil der Saugleitung 32 an einem im Sinne des Doppelpfeils 36 auf- und abverschiebbaren, die thermische Schneidstrahleinrichtung 17 konzentrisch umgebenden Rohr 37. Es trägt einen Aussenbund 38, der in Verbindung mit einem hydraulischen oder pneumatischen Arbeitszylinder 39 das Verschieben ermöglicht. Das freie Ende 40 des verstellbaren Rohres bildet eine vorzugsweise plane Abstützfläche, welche einigermassen dicht auf der Werkstück-Oberseite 20 aufliegt. Im übrigen entnimmt man der Fig. 2, dass die Eintrittsmündung 41 der Absaugdüse bzw. Absaugbohrungen etwa bis zum freien Ende des verschiebbaren Rohres, d.h. annähernd bis zum freien Ende 40 des verschiebbaren Rohres 37 reicht bzw. reichen.

Die Absaugvorrichtung 28 ist gemäss einer weiteren Ausgestaltung der Erfindung konzentrisch von einer ringförmigen Sprühvorrichtung 42 zur Erzeugung eines rohrförmigen Wasservorhangs 43 umgeben. Sie ist in vergleichbarer Art aufgebaut wie die Absaugvorrichtung 28, jedoch mit dem Unterschied, dass die Leitung 44 eine Zuführungsleitung für das Wasser ist, aus dem der Wasservorhang gebildet werden soll. Weil man jedoch zweckmässigerweise auch das Wasser des letzteren nicht unkontrolliert abfliessen lassen will, umgibt man die ringförmige Sprühvorrichtung 42 mit einer zweiten Absaugvorrichtung 45, die dem Prinzip nach derjenigen der Absaugvorrichtung 28 entspricht. Sowohl diese zweite Absaugvorrichtung als auch die Sprühvorrichtung kann man gegebenenfalls auch im Sinne des Doppelpfeils 36 zustellbar ausbilden. Wenn die Absaugvorrichtung 28 kräftig genug ist, so kann sie, wie mit strichpunktierten Linien 50 in Fig. 2 symbolisch dargestellt, das Wasser der ringförmigen Sprühvorrichtung 42 auch über die Absaugvorrichtung 28 entfernen oder zumindest auf diese Weise die zweite Absaugvorrichtung 45 unterstützen.

Die Pumpe 46 (Fig. 1) liefert über die Leitung 47 das Wasser in den Kanal 26. Über eine schematisch eingezeichnete Abzweigung 48 wird die Zuführungsleitung 44 der ringförmigen Sprühvorrichtung 42 mit Druckwasser versorgt. In analoger Weise kann man die Saugleitung 49 in nicht näher gezeigter Weise mit der Saugleitung 32 verbinden, so dass das Wasser des Wasservorhangs 43 ebenfalls mit Hilfe der Saugpumpe 33 abgesaugt werden kann.

Die thermische Schneidstrahleinrichtung 17 kann in vorteilhaftei- Weise im seitlichen Abstand von einer Stanz- oder Nibbelvorrichtung 51 der Bearbeitungsmaschine angeordnet sein. In diesem Falle kann man mit dieser Bearbeitungsmaschine das Werkstück nicht nur mechanisch, sondern alternativ oder zusätzlich auch thermisch bearbeiten.

**Patentansprüche**

1. Bearbeitungsmaschine für flache Werkstücke (3) mit einer thermischen Schneidstrahleinrichtung, insbesondere Plasmaschneideinrichtung, die eine Öffnung fur den Schneidstrahl aufweist und bei der konzentrisch zum Schneidstrahl Wasser austritt, wobei konzentrisch zur Schneidstrahleinrichtung eine ringformige Vorrichtung (28) zum Abfuhren des Wassers angeordnet ist, dadurch gekennzeichnet, daß fur die Wasserzufuhr eine konzentrisch zur Öffnung für den Schneidstrahl angeordnete ringformige Öffnung vorgesehen ist und daß die ringförmige Vorrichtung (28) eine Absaugdüse (29) bildet, die an einem am Werkstuck (3) anlegbaren Rohr (37) angeordnet ist, wobei die Düsen-Eintrittsmündung (41) etwa bis zum freien, eine Abstützfläche bildenden Rohrende (40) reicht, und daß eine Vorrichtung zum Bewegen des Werkstuckes (3) innerhalb der Werkstuckebene vorgesehen ist.

2. Maschine nach Anspruch 1, dadurch gekennzeichnet, daß eine gedachte mittlere Fläche (30) der Absaugdüse (29) bzw. die Mittellinien der Absaugbohrungen die Form eines Kegelstumpfs aufweist bzw. auf einem gedachten Kegelstumpf liegen, dessen kleinerer Durchmesser der Werkstückauflage zugeordnet ist.

3. Maschine nach Anspruch 1 oder 2, dadurch gekennzeichnet, daß in das innere Ende der Absaugdüse (29) oder in einen die inneren Enden der Absaugbohrungen verbindenden Ringkanal (31) weningstens eine mit einer Absaugvorrichtung (33) verbunedene Saugleitung (32) mündet.

4. Maschine nach einen oder mehreren der vorgehenden Ansprüche, dadurch gekennzeichnet, daß das die thermische Schneidstrahleinrichtung (17) konzentrisch umgebende Rohr (37) in Richtung (36) seiner Längsache verschiebbar gelagert ist.

5. Maschine nach einem oder mehreren der vorhergenden Ansprüche, dadurch gekennzeichnet, daß die Absaugvorrichtung (28) konzentrisch von einer ringförmigen Spühvorrichtung (42) zur Erzeugung eines rohrförmigen Wasservorhangs (43) umgeben ist.

6. Maschine nach Anspruch 5, dadurch gekennzeichnet, daß konzentrisch zur Sprühvorrichtung (42) eine weitere Absaugvorrichtung (45) für die Sprühflüssigkeit angeordnet ist.

7. Vorrichtung nach Anspruch 6, dadurch gekennzeichnet, daß die Absaugvorrichtung (28) fü die Schneidstrahlflüssigkeit zugleich die Absaugvorrichtung (50) für die Sprühflüssigkeit (43) bildet.

8. Maschine nach einem oder mehreren der vorgehenden Ansprüche, dadruch gekennzeichnet, daß die thermische Schneidstrahleinrichtung (17) im seitlichen Abstand von einer Stanz- oder Nibbelvorrichtung der Bearbeitungsmaschine angeordnet ist.

**Claims**

1. Shaping machine for flat workpieces (3) comprising a thermal cutting beam device, particularly a plasma cutting device, having an opening for the cutting beam and in which water emerges concentrically of the cutting beam, there being provided concentrically of the cutting beam device an annular device (28) for carrying away the water, characterised in that for water feed there is an annular aperture disposed concentrically of the opening for the cutting beam and in that the annular device (28) constitutes an extractor nozzle (29) disposed on a tube (37) which can be applied to the workpiece (3), the nozzle inlet mouth (41) extending substantially to the free tube end (40) which forms a supporting surface and in that a device is provided for moving the workpiece (3) within the workpiece plane.

2. Machine according to Claim 1, characterised in that an imaginary central face (30) of the extractor nozzle (29) or the median lines of the extractor bores comprise the form of a truncated cone or lie on an imaginary truncated cone, the smaller diameter of which is associated with the workpiece support.

3. Machine according to Claim 1 or 2, characterised in that at least one suction line (32) connected to a vacuum extraction apparatus (33) discharges in the inner end of the extractor nozzle (29) or in an annular duct (31) connecting the inner ends of the extraction bores.

4. Machine according to one or more of the preceding Claims, characterised in that the tube (37) which concentrically encloses the thermal cutting beam device (17) is mounted for displacement in the direction (36) of its longitudinal axis.

5. Machine according to one or more of the preceding Claims, characterised in that the extraction apparatus (28) is concentrically enclosed by an annular spray device (42) for generating a tubular curtain (43) of water,

6. Machine according to Claim 5 characterised in that concentrically of the spray device (42) there is a further extraction apparatus (45) for the spray liquid.

7. Machine according to Claim 6, characterised in that the extraction apparatus (28) for the cutting beam liquid is at the same time the extraction device (50) for the spray liquid (43).

8. Machine according to one or more of the preceding Claims, characterised in that the thermal cutting beam device (17) is spaced apart laterally from a stamping or nibbling device on the shaping machine.

**Revendications**

1. Machine d'usinage pour pièces plates (3) comprenant un dispositif thermique de coupe par jet, en particulier un dispositif de coupe par jet de plasma présentant une ouverture pour le jet de coupe par laquelle de l'eau sort concentriquement au jet de coupe, un dispositif (28) annulaire, concentrique au dispositif de coupe par jet, étant prévu pour évacuer l'eau, caractérisée en ce qu'il est prévu une ouverture annulaire, concentrique à l'ouverture pour le jet de coupe, destiné à l'arrivée d'eau et en ce que le dispositif (28) annulaire forme une buse d'aspiration qui est montée sur un tube (37) pouvant être appliqué sur la pièce (3), l'orifice d'entrée (41) allant à peu près jusqu'à l'extrémité libre (40) du tube formant une surface d'appui, et en ce qu'il est prévu un dispositif pour déplacer la pièce (3) dans le plan de cette pièce.

2. Machine selon la revendication 1, caractérisée en ce qu'une surface médiane imaginaire (30) de la buse d'aspiration (29) ou les axes des trous d'aspiration présente la forme d'un tronc de cône ou se trouve sur un tronc de cône imaginaire dont le petit diamètre correspond au support de la pièce.

3. Machine selon la revendication 1 ou 2, caractérisée en ce qu'au moins une conduite d'aspiration (32) reliée à un dispositif d'aspiration (33) débouche à l'extrémité intérieure de la buse d'apiration (29) ou dans un conduit annulaire (31) reliant les extrémités intérieures des trous d'aspiration.

4. Machine selon l'une ou plusieurs des revendications 1 à 3, caractérisée en ce que le tube (37) entourant concentriquement le dispositif thermique de coupe par jet (17) est supporté de manière à pouvoir coulisser dans la direction (36) de son axe longitudinal.

5. Machine selon une ou plusieurs des revendications 1 à 4, caractérisée en ce que le dispositif d'aspiration (28) est entouré concentriquement par un dispositif de pulvérisation (42) annulaire destiné à produire un rideau d'eau (43) tubulaire.

6. Machine selon la revendication 5, caractérisée en ce qu'un autre dispositif d'aspiration (45) pour le liquide de pulvérisation est disposé concentriquement au dispositif de pulvérisation (42).

7. Machine selon la revendication 6, caractérisée en ce que le dispositif d'aspiration (28) pour le liquide de coupe par jet constitue en même temps le dispositif d'aspiration (50) pour le liquide de pulvérisation (43).

8. Machine selon une ou plusieurs des revendications 1 à 7, caractérisée en ce que le dispositif thermique de coupe par jet (17) est disposé latéralement à une certaine distance d'un dispositif de poinçonnage ou de grignotage de la machine d'usinage.

FIG.1

0 046 910

FIG.2